# EUROPÄISCHE PATENTSCHRIFT

(11) **EP 1 378 415 B1**
(45) Veröffentlichungstag und Bekanntmachung des Hinweises auf die Patenterteilung: **15.06.2005**
(21) Anmeldenummer: 03003680.0
(22) Anmeldetag: 18.02.2003
(51) Int. Cl.: B60T 13/74, B60T 17/08, B61H 13/00, B61H 11/16

(54) **Speicherbremsgerät**
Spring loaded brake apparatus
Dispositif de frein à ressort

(30) Priorität: 05.07.2002 DE 10230352
(43) Veröffentlichungstag der Anmeldung: 07.01.2004
(73) Patentinhaber: Bosch Rexroth AG, 70184 Stuttgart (DE)
(72) Erfinder: Laube, Martin, 97816 Lohr (DE); Dantlgraber, Jörg, 97816 Lohr (DE); Schäfer, Wolfgang, 97855 Triefenstein (DE)
(74) Vertreter: Winter, Brandl,&Fürniss, Hübner Röss, Kaiser, Polte Partnerschaft Patent- und Rechtsanwaltskanzlei

(56) Entgegenhaltungen:
- EP-A- 0 034 803
- EP-A- 0 129 969
- DE-A- 3 838 667

## Beschreibung

Die Erfindung betrifft ein Speicherbremsgerät, insbesondere für Schienenfahrzeuge gemäß dem Oberbegriff des Patentanspruches 1.

In der DE 38 38 667 A1 ist ein derartiges hydromechanisch betätigtes Speicherbremsgerät offenbart, bei dem ein Aktuator einer Bremse eines Schienenfahrzeuges eine Kolben-Zylinder-Einheit aufweist, deren Kolben über einen Federspeicher in Richtung Betätigen der Bremse beaufschlagt ist. Eine in Gegenrichtung wirksame Stirnfläche des Kolbens wird über eine im Federraum der Kolben-Zylinder-Einheit integrierte elektrisch angetriebene Hydropumpe mit Druckmittel beaufschlagt, um den Bremseingriff zu lösen. Für den Fall einer Notbremsung kann der den Kolben in Richtung Lösen der Bremse beaufschlagende Druckraum der Kolben-Zylinder-Einheit über ein Schaltventil mit einem durch den Federraum begrenzten Vorratsbehälter verbunden werden.

Problematisch bei dieser Lösung ist, daß sich der in Richtung Lösen der Bremse wirksame Lüftungsdruck nur schwierig verändern läßt.

Zur Beseitigung dieses Nachteiles wird in der älteren Patentanmeldung DE 101 35 029.5 ein Speicherbremsgerät vorgeschlagen, bei dem die Hydropumpe zum Aufbringen des Entlüftungsdruckes als einstellbare, insbesondere regelbare Primäreinheit ausgebildet ist. Bei einem konkreten Ausführungsbeispiel ist diese Primäreinheit durch eine Plungerpumpe gebildet, die von einem Elektromotor angetrieben ist. Diese Plungerpumpe ist parallel zum Kolben der Kolben-Zylinder-Einheit angeordnet.

In der EP 0 129 969 B1 ist ein Speicherbremsgerät offenbart, das auf einem rein mechanischen Konzept beruht. Dabei wird der Bremsaktuator durch eine Federkombination beaufschlagt, deren Vorspannung über eine Spindel veränderbar ist. Derartige Lösungen sind insbesondere bei Notbremsungen in den eingangs beschriebenen hydromechanischen Lösungen unterlegen.

Der Erfindung liegt die Aufgabe zugrunde, ein Speicherbremsgerät zu schaffen, das bei minimalem vorrichtungstechnischen Aufwand eine einfache Bremsbetätigung ermöglicht.

Diese Aufgabe wird durch ein Speicherbremsgerät mit den Merkmalen des Patentanspruches 1 gelöst.

Erfindungsgemäß hat das Speicherbremsgerät einen Kolben, der in Bremsbetätigungsrichtung von einem mechanischen Kraftspeicher, insbesondere einem Federspeicher und in Richtung Lösen der Bremse von einem hydraulischen Lüftungsdruck beaufschlagbar ist. Der Kolben trägt erfindungsgemäß eine axial verschiebbare Spindel, durch deren Axialverschiebung die Bremse betätigt oder gelöst werden kann, wobei dann der maximal aufbringbare Bremsdruck durch die Federrate und Vorspannung des Kraftspeichers begrenzt ist.

Diese Lösung zeichnet sich durch einen äußerst kompakten mechanischen Aufbau aus, wobei sich durch entsprechende Ansteuerung der Spindel die wirksame Bremskraft sehr exakt und schnell einstellen läßt.

Bei einem bevorzugten Ausführungsbeispiel trägt die Spindel einen Kolben, über den Druckmittel aus einem Vorratsbehälter ansaugbar und zu einem Hydrospeicher förderbar ist, an den ein in Richtung Lösen der Bremse wirksamer Lüftungsdruckraum anschließbar ist.

Vorteilhafter Weise zweigt von einer Druckleitung zwischen dem Lüftungsdruckraum und dem Schaltventil eine Entlastungsleitung ab, in der ein Notbremsventil angeordnet ist. Durch Öffnen dieses Notbremsventils kann dann der Lüftungsdruckraum mit dem Vorratsbehälter verbunden werden, so daß der in Öffnungsrichtung wirksame hydraulische Druck sehr schnell abgebaut und die Bremse in Eingriff gebracht werden kann.

Bei einer besonders kompakt aufgebauten Variante wird die Spindel über eine im Kolben gelagerte Spindelmutter angetrieben. Dabei ist es besonders bevorzugt, wenn diese Spindelmutter in einem Motorläufer eines Elektromotors angeordnet ist, der in den Kolben des Speicherbremsgerätes eingebaut ist.

Der maximale Druck im Hydrospeicher kann über ein Druckbegrenzungsventil begrenzt werden.

Sonstige vorteilhafte Weiterbildungen der Erfindung sind Gegenstand der weiteren Unteransprüche.

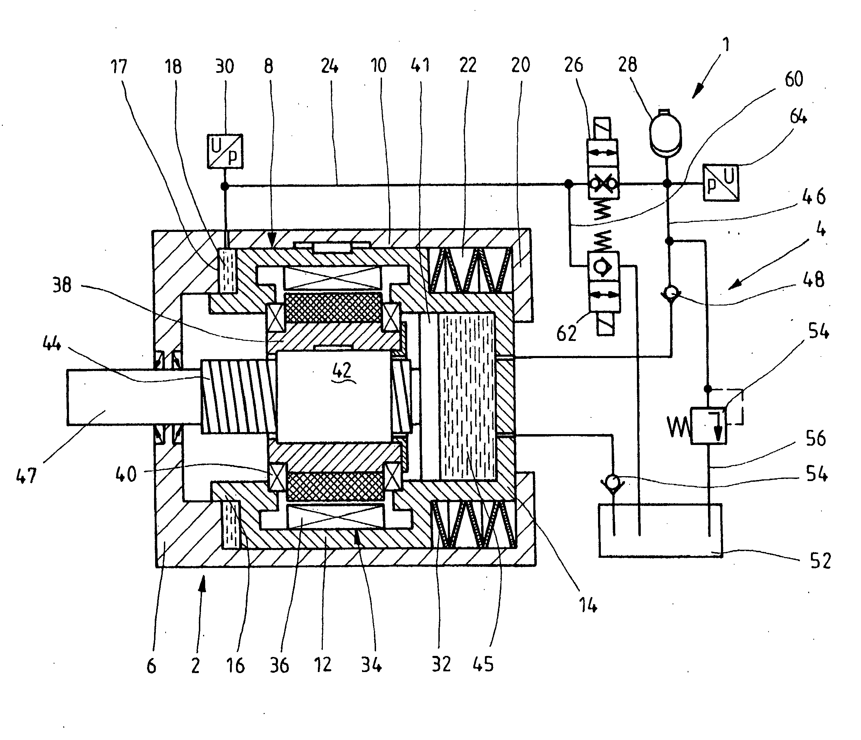

Im folgenden wird ein bevorzugtes Ausführungsbeispiel anhand einer schematischen Zeichnung näher erläutert. Die einzige Figur zeigt einen Schnitt durch einen erfindungsgemäßes Speicherbremsgerät mit den zugehörigen hydraulischen Bauelementen.

In dieser Figur ist ein Speicherbremsgerät 1 mit einem Bremsaktuator 2 und den wesentlichen hydraulischen Schaltelementen 4 dargestellt. Der Bremsaktuator 2 besteht im wesentlichen aus einer Kolben-Zylinder-Einheit mit einem Zylinder 6, in dem ein Stufenkolben 8 axial verschiebbar geführt ist.

Der Kolben 8 ist mehrteilig ausgeführt und hat einen äußeren Kolbenmantel 10, der einen radial vorspringenden Radialbund 12, einen Kolbenboden 14 und einen vorderen (links in der Figur) Ringbund 16 ausbildet.

Der Zylinder 6 hat eine Radialschulter 17 die gemeinsam mit der benachbarten Stirnfläche des Radialbundes 12 einen Lüftungsdruckraum 18 begrenzt. Die in der Figur rechte Stirnfläche des Radialbundes 12 bildet mit einer Zylinderrückwand 20 einen Federraum 22. Der Lüftungsraum 18 ist über eine Druckleitung 24 und ein Schaltventil 26 an einen Druckspeicher 28 angeschlossen.

Das Schaltventil 26 ist in seiner dargestellten Grundposition über eine Ventilfeder in seine Schließstellung vorgespannt. Durch Bestromung eines Elektromagneten kann es in eine Öffnungsstellung gebracht werden, so daß der Druck im Druckraum 18 durch den Druck des Druckspeichers 28 bestimmt ist. Der Druck im Druckraum 18 kann über einen Drucksensor 30 erfaßt werden. Im Federraum 22 ist ein Federspeicher angeordnet, der bei dem dargestellten Ausführungsbeispiel durch ein Tellerfederpaket 32 gebildet ist. Dieses ist an der Rückwand 20 des Zylinders abgestützt und greift an der rechten Ringstirnfläche des Radialbundes 12 an. Der Kolben 8 ist somit nach links, d.h. in Richtung Betätigen der Bremse durch die Kraft der Tellerfeder 32 und nach rechts, d.h. in Richtung Lösen der Bremse durch die auf die linke Stirnfläche des Radialbundes 12 wirkende Druckkraft im Lüftungsdruckraum 18 beaufschlagt.

Im Kolben 10 ist ein Elektromotor 34 gelagert, wobei dessen Spule 36 drehfest an der Innenumfangswandung des Kolbens 8 befestigt ist, während ein Motorläufer 38 über eine Lagerung 40 drehbar am Kolben 8 aufgenommen ist. D.h. der Kolben 8 bildet praktisch ein Gehäuse des Elektromotors 34.

Der Motorläufer 38 ist drehfest mit einer Spindelmutter 42 verbunden, die ihrerseits mit einer Spindel 44 in Eingriff steht, deren linker Endabschnitt als Aktuater 47 aus dem Zylinder 6 herausgeführt ist und ein Bremskolben 46 betätigt. D.h. durch Ansteuern des Elektromotors 34 wird der Motorläufer 38 und damit die Spindelmutter 42 gedreht, so daß die Spindel 44 einen entsprechenden Axialvorschub durchführt, um die Bremse zu betätigen oder zu lösen.

Der Eingriff zwischen Spindelmutter 42 und Spindel 44 ist vorzugsweise selbsthemmend ausgeführt, so daß auf Bremselemente oder ähnliches verzichtet werden kann. Der Elektromotor ist regelbar mit Drehrichtungsumkehrbarkeit ausgeführt, wobei beispielsweise der Bremsdruck durch Veränderung des Motordrehmomentes einstellbar ist.

An der Rückseite der Spindel 44 ist ein Pumpkolben 41 angeordnet, der mit dem Kolbenboden 14 einen Pumpraum 45 begrenzt. Dieser ist über eine Ladeleitung 46 und ein zum Druckspeicher 28 hin öffnendes Rückschlagventil 48 mit dem Druckspeicher 28 verbunden. Diese Druckleitung 46 durchsetzt eine Ausnehmung der Rückwand 20 des Zylinders 6 und den Kolbenboden 14. Der Druck in der Ladeleitung 46 kann über einen weiteren Drucksensor 64 erfaßt werden.

Es sei nunmehr angenommen, daß der Hydrospeicher 28 auf seinen vorbestimmten Maximaldruck aufgeladen ist. Die beiden Ventile 26, 62 befinden sich in ihren dargestellten Schließpositionen und der Kolben ist durch einen im Lüftungsdruckraum 18 anliegenden maximalen Entlüftungsdruck in seine rechte Endposition gefahren, in der er mit dem Kolbenboden 14 an der Rückwand 20 anliegt. Die Spindel 42 befindet sich in einer Position, in der die Bremse noch nicht betätigt ist. In dieser, in der Figur dargestellten Position ist die Vorspannung des Tellerfederpaketes 32 maximal. Zur Einstellung der gewünschten Vorspannung, die in der Regel unterhalb der maximalen Vorspannung des Tellerfederpaketes liegt, wird das Notbremsventil 62 geöffnet, so daß der Druck im Lüftungsdruckraum 18 abgebaut wird, bis die gewünschte Federvorspannung und damit der gewünschte Lüftungsdruck eingestellt ist. Dieser Druck wird über den Drucksensor 30 abgegriffen und als Stellsignal an die Bremssteuerung gemeldet. Nach Einstellung dieser Federvorspannung wird dann die Spindel 44 in eine Position gefahren, in der die Bremse gerade gelüftet ist.

Beim regulären Betriebsbremsen wird dann der Elektromotor 34 so angesteuert, daß die Spindel 44 ausfährt und über den Aktuator 47 die Bremse betätigt wird. Durch die Axialverschiebung der Spindel 44 läßt sich ein beliebiger Bremsdruck einstellen, der zwischen 0 und dem voreingestellten Lüftungsdruck im Lüftungsdruckraum 18 liegt. Bei einem weiteren Ausfahren der Spindel 44 wird der Kolben 8 gegen die Kraft des Tellerfederpaketes 32 nach rechts bewegt, so daß die maximale Bremskraft beschränkt ist. Diese maximale Bremskraft läßt sich jedoch - wie bereits vorstehend erwähnt - durch geeignete Ansteuerung der Ventile 26 und 62 und ggf. Einstellung des Druckes im Hydrospeicher 28 verändern.

Zum Einleiten einer Notbremsung wird das als sehr schnell schaltendes Ventil ausgelegte Notbremsventil 62 aufgesteuert, so daß der Druck im Lüftungsdruckraum 18 abgebaut und die Bremse schnell und mit maximaler Wirkung einrückt.

Zum Lösen der Bremse wird die Spindel 44 wieder in ihre Ausgangsposition zurückgefahren. Beim Ausfahren der Spindel (Einrücken der Bremse) vergrößert sich der durch den Pumpkolben 41 begrenzte Pumpraum 45, so daß Druckmittel aus dem Vorratsbehälter 52 über das sich öffnende Rückschlagventil 54 und die Zulaufleitung 50 angesaugt wird. Beim Lösen der Bremse und dem damit verbundenen Zurückfahren der Spindel 44 wird der Pumpraum 45 verkleinert, so daß das Druckmittel über die Ladeleitung 46 und das Rückschlagventil 48 verdrängt wird - der Hydrospeicher 28 wird aufgeladen. Der Maximaldruck des Hydrospeichers 28 wird durch das Druckbegrenzungsventil 54 auf einen Maximalwert begrenzt und kann über die Ventile 26, 62 auf darunter liegende Werte abgesenkt werden.

Durch Zusammenwirken der beiden Ventile 26, 62, die in Abhängigkeit von einem nicht näher dargestellten Rad-Drehzahlsensor angesteuert werden, kann auch ein Blockieren des abgebremsten Rades verhindert werden, indem der Bremsdruck dann abgesenkt wird, wenn ein übermässiger Schlupf am Rad festgestellt wird und der Bremsdruck wieder aufgebaut wird, sobald der Schlupf innerhalb vorgegebener Grenzen liegt.

Das dargestellte Speicherbremsgerät kann auch als Parkbremse unabhängig vom Druck im Hydrauliksystem verwendet werden, indem die Spindel 44 zum Aufbringen der Parkbremskraft ausgefahren wird.

Selbstverständlich können anstelle des Tellerfederpaketes 32 auch andere geeignete Kraftspeicher, beispielsweise eine Schraubenfeder oder ähnliches eingesetzt werden. Besonders vorteilhaft bei der vorliegenden Erfindung ist, daß der Elektromotor 34 praktisch immer nur dann betätigt werden muß, wenn Bremskraft aufgebracht werden soll. Bei den eingangs beschriebenen Lösungen wurden über die verwendeten Elektromotoren wesentlich mehr Funktionen gesteuert.

Offenbart ist ein Speicherbremsgerät, insbesondere für Schienenfahrzeuge, mit einer Kolben-Zylinder-Einheit, deren Kolben in Richtung Betätigen der Bremse von einem Kraftspeicher, insbesondere einem Federspeicher und in Richtung Lösen der Bremse von einem hydraulischen Lüftungsdruck beaufschlagt ist. Der Kolben trägt eine Spindel, die zum Betätigen oder Lösen der Bremse mittels eines Elektromotors axial verschiebbar ist. Dieser Elektromotor ist bei einem bevorzugten Ausführungsbeispiel im Kolben des Speicherbremsgerätes aufgenommen.

### Bezugszeichenliste:

- 1: Speicherbremsgerät
- 2: Bremsaktuator
- 4: hydraulische Schaltung
- 6: Zylinder
- 8: Kolben
- 10: Kolbenbund
- 12: Radialbund
- 14: Kolbenboden
- 16: Ringbund
- 17: Radialschulter
- 18: Lüftungsdruckraum
- 20: Rückwand
- 22: Federraum
- 24: Druckleitung
- 26: Schaltventil
- 28: Druckspeicher
- 30: Drucksensor
- 32: Tellerfederpaket
- 34: Elektromotor
- 36: Spule
- 38: Motorläufer
- 40: Lagerung
- 41: Pumpkolben
- 42: Spindelmutter
- 44: Spindel
- 45: Pumpraum
- 46: Ladeleitung
- 47: Aktuater
- 48: Rückschlagventil
- 50: Zulaufleitung
- 52: Vorratsbehälter
- 54: Rückschlagventil
- 56: Tankleitung
- 58: Druckbegrenzungsventil
- 60: Entlastungsleitung
- 62: Notbremsventil
- 64: weiterer Drucksensor

## Patentansprüche

1. Speicherbremsgerät, insbesondere für Schienenfahrzeuge, mit einem Kolben (8), der in Richtung Betätigen der Bremse von einem Kraftspeicher, insbesondere einem Federspeicher (32) und in Richtung Lösen der Bremse von einem hydraulischen Lüftungsdruck beaufschlagbar ist, **dadurch gekennzeichnet, daß** der Kolben (8) eine zum Betätigen oder Lösen der Bremse axial verschiebbare Spindelanordnung (42, 44) trägt.

2. Speicherbremsgerät nach Patentanspruch 1, wobei die Spindelanordnung (42, 44) einen Pumpkolben (41) antreibt, über den Druckmittel in einen Pumpraum (45) ansaugbar oder aus diesem in einen Druckspeicher (28) verdrängbar ist.

3. Speicherbremsgerät nach Patentanspruch 2, wobei der Pumpraum (45) im Kolben (8) ausgebildet ist.

4. Speicherbremsgerät nach einem der vorhergehenden Patentansprüche, wobei der Kolben (8) einen in Richtung Lösen der Bremse wirksamen Stirnflächenabschnitt hat, der einen Lüftungsdruckraum (18) begrenzt, der über ein Schaltventil (26) mit einer Druckmittelquelle, insbesondere einem Druckspeicher (28) verbunden ist.

5. Speicherbremsgerät nach Patentanspruch 4, wobei in einer Ladeleitung (46) zwischen dem Pumpraum (45) und dem Druckspeicher (28) ein Druckbegrenzungsventil (54) angeordnet ist.

6. Speicherbremsgerät nach Patentanspruch 4 oder 5, wobei von einer Druckleitung zwischen dem Schaltventil (26) und dem Lüftungsdruckraum (18) eine Entlastungsleitung (60) abzweigt, in der ein Notbremsventil (62) zum Verbinden der Entlastungsleitung (60) mit einem Vorratsbehälter (52) angeordnet ist.

7. Speicherbremsgerät nach einem der Patentansprüche 2 bis 6, wobei die Spindelanordnung eine Spindel (44) hat, die über eine im Kolben (8) drehbar gelagerte Spindelmutter (42) angetrieben ist.

8. Speicherbremsgerät nach Patentanspruch 7, wobei ein Elektromotor (34) der Spindelanordnung im Kolben (8) gelagert ist.

9. Speicherbremsgerät nach Patentanspruch 8, wobei die Spindelmutter (42) in einem Motorläufer (38) des Elektromotors (34) gelagert ist.

## Claims

1. Energy storage brake device, in particular for rail vehicles, having a piston (8) which can be acted on in the actuation direction of the brake by an energy store, in particular a resilient energy store (32), and, in the release direction of the brake, by a hydraulic release pressure, **characterised in that** the piston (8) carries a spindle arrangement (42, 44) which can be axially displaced in order to actuate or release the brake.

2. Energy storage brake device according to patent claim 1, the spindle arrangement (42, 44) driving a pump piston (41), by means of which pressurised means can be drawn into a pump space (45) or can be forced out of the pump space (45) into a pressure accumulator (28).

3. Energy storage brake device according to patent claim 2, the pump space (45) being constructed in the piston (8).

4. Energy storage brake device according to any one of the preceding patent claims, the piston (8) having an end face portion which acts in the release direction of the brake and which delimits a release pressure space (18) which is connected, by means of a switching valve (26), to a source of pressurised means, in particular a pressure accumulator (28).

5. Energy storage brake device according to patent claim 4, a pressure limitation valve (54) being arranged in a charge line (46) between the pump space (45) and the pressure accumulator (28).

6. Energy storage brake device according to patent claim 4 or 5, a relief line (60) branching from a pressure line between the switching valve (26) and the release pressure space (18), in which relief line (60) an emergency brake valve (62) is arranged in order to connect the relief line (60) to a storage container (52).

7. Energy storage brake device according to any one of patent claims 2 to 6, the spindle arrangement having a spindle (44) which is driven by means of a spindle nut (42) which is rotatably arranged in the piston (8).

8. Energy storage brake device according to patent claim 7, an electric motor (34) of the spindle arrangement being arranged in the piston (8).

9. Energy storage brake device according to patent claim 8, the spindle nut (42) being arranged in a motor armature (38) of the electric motor (34).

## Revendications

1. Dispositif de freinage par accumulation, en particulier pour véhicules sur rails, comportant un piston (8) qui peut être alimenté par un accumulateur d'énergie, en particulier un accumulateur à ressort (32), dans le sens d'actionnement du frein et par une pression de ventilation hydraulique dans le sens de déblocage du frein, **caractérisé en ce que** le piston (8) porte un agencement de broche (42, 44) coulissant axialement en vue de l'actionnement ou du déblocage du frein.

2. Dispositif de freinage par accumulation selon la revendication 1, dans lequel l'agencement de broche (42, 44) actionne un piston de pompage (41), via lequel un moyen de pression peut être admis dans une chambre de pompage (45) ou être déplacé hors de celle-ci dans un accumulateur de pression (28).

3. Dispositif de freinage par accumulation selon la revendication 2, dans lequel la chambre de pompage (45) est réalisée dans le piston (8).

4. Dispositif de freinage par accumulation selon l'une quelconque des revendications précédentes, dans lequel le piston (8) dispose d'une section frontale active dans le sens de déblocage du frein, ladite section frontale délimitant une chambre de pression de ventilation (18) qui est reliée à une source de moyen de pression, en particulier à un accumulateur de pression (28), via une soupape de commande (26).

5. Dispositif de freinage par accumulation selon la revendication 4, dans lequel une soupape de limitation de pression (54) est disposée dans une conduite de charge (46) entre la chambre de pompage (45) et l'accumulateur de pression (28).

6. Dispositif de freinage par accumulation selon la revendication 4 ou 5, dans lequel une conduite de décharge (60) bifurque d'une conduite sous pression entre la soupape de commande (26) et la chambre de pression de ventilation (18), une soupape de frein de secours (62) étant disposée dans ladite conduite de décharge en vue de relier la conduite de décharge (60) à un réservoir de stockage (52).

7. Dispositif de freinage par accumulation selon l'une quelconque des revendications 2 à 6, dans lequel l'agencement de broche dispose d'une broche (44) qui est entraînée via un écrou de broche (42) logé tournant dans le piston (8).

8. Dispositif de freinage par accumulation selon la revendication 7, dans lequel un moteur électrique (34) de l'agencement de broche est logé dans le piston (8).

9. Dispositif de freinage par accumulation selon la revendication 8, dans lequel l'écrou de broche (42) est logé dans un induit de moteur (38) du moteur électrique (34).
